# FASCICULE DE BREVET EUROPEEN

(11) **EP 0 412 478 B1**
(45) Date de publication et mention de la délivrance du brevet: **11.01.1995**
(21) Numéro de dépôt: 90115068.0
(22) Date de dépôt: 06.08.1990
(51) Int. Cl.: H01H 33/12, H01H 33/24, H02B 1/16

(54) **Disjoncteur-sectionneur de générateur**
Generatorlasttrennschalter
Generator load break switch

(30) Priorité: 07.08.1989 FR 8910622
(43) Date de publication de la demande: 13.02.1991
(73) Titulaire: GEC ALSTHOM SA, 75116 Paris (FR)
(72) Inventeur: Thuries, Edmond, F-69330 Meyzieu (FR); Pham, Van Doan, F-69330 Meyzieu (FR); Martin, Joseph, F-69330 Meyzieu (FR); Bonnaire, Jean, F-69740 Genas (FR)
(74) Mandataire: Weinmiller, Jürgen

(56) Documents cités:
- CH-A- 559 438
- FR-A- 2 305 871
- FR-A- 2 355 364
- US-A- 3 290 469

## Description

L'invention concerne la protection des circuits électriques et notamment les circuits de liaison des générateurs.

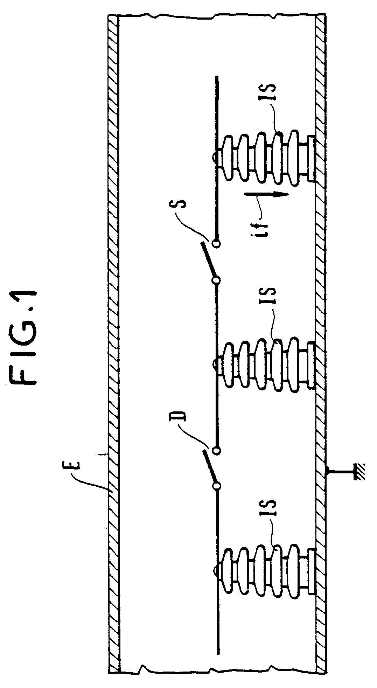

Dans les centrales électriques, on trouve, en aval du générateur, un disjoncteur de protection. Pour assurer une complète protection des travailleurs intervenant sur le générateur, il est prévu de disposer, en série avec le disjoncteur et en aval de celui-ci, un sectionneur. On rappelle que le sectionneur a la propriété d'écouler les courants de fuite à la terre à travers ses isolateurs et non entre ses contacts. On a illustré une telle disposition dans le schéma de la figure 1 où l'on voit, en série, un disjoncteur D et un sectionneur S dont les parties actives sont isolées d'une enveloppe blindée E à la terre par des isolateurs IS. Le courant de fuite if, lorsque les appareils sont ouverts' s'écoule par les isolateurs et non entre les contacts du sectionneur.

La Demanderesse s'est proposée de réaliser un appareil, à coupure dans un gaz diélectrique sous pression, pouvant effectuer les opérations d'un disjoncteur et assurer en même temps les fonctions de protection offertes par le sectionneur. Cet appareil, appelé disjoncteur-sectionneur, doit avoir le pouvoir de coupure d'un disjoncteur; il doit par ailleurs :
- être compact et posséder le minimum de pièces de manière à diminuer son prix de revient,
- permettre un écoulement à la terre des courants de fuite par ses isolateurs,
- permettre une visualisation de l'état des contacts,
- posséder un verrouillage des contacts lorsque l'appareil est déclenché,
- assurer sa tenue diélectrique en cas de chute brutale de la pression du gaz diélectrique d'isolement.

On connaît, par le document FR-A-2305871, un interrupteur-sectionneur comprenant un écran diélectrique relié à la masse et situé entre les contacts en position d'ouverture.

On connaît aussi, par le document FR-A2355364, un disjoncteur comprenant un hublot disposé dans l'enveloppe de l'appareil.

L'appareil assurant les avantages cités ci-dessus est défini par la revendication.

L'invention sera bien comprise par la description ci-après d'un mode préféré de réalisation de l'invention, en référence au dessin annexé dans lequel:
- la figure 1 est un schéma montrant un disjoncteur en série avec un sectionneur,
- la figure 2 est une vue en coupe axiale d'un disjoncteur-sectionneur selon l'invention.

La figure 1 a déjà été commentée et on n'y reviendra pas.

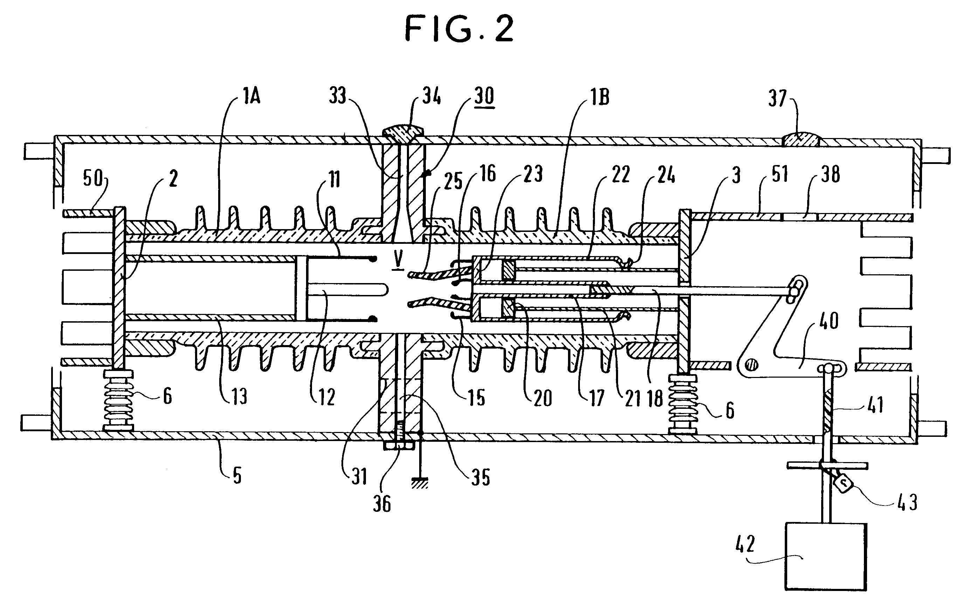

Dans la figure 2, les références 1A-1B désignent une enveloppe isolante étanche munie d'ailettes et délimitant, avec deux flasques métalliques d'extrémité 2 et 3, un volume V dans lequel règne un gaz à bonnes propriétés diélectriques sous une pression de 1 à plusieurs bars. Le gaz est de préférence de l'hexafluorure de soufre pur ou mélangé à un autre gaz tel que l'azote. Les deux flasques d'extrémité sont reliés aux prises de courant 50, 51, elles-mêmes reliées de la manière habituelle au circuit à protéger.

L'enveloppe est disposée à l'intérieur d'une gaine métallique 5 et est soutenue par des isolateurs 6. La gaine, remplie d'air sous pression ou à la pression atmosphérique, est mise à la terre.

A l'intérieur de l'enveloppe isolante, on trouve un ensemble fixe comprenant un contact permanent 11, un contact d'arc 12, ces deux contacts étant portés par un tube métallique 13 relié électriquement et mécaniquement au flasque 2.

On trouve également à l'intérieur de l'enveloppe un ensemble mobile comprenant un contact permanent 15 et un contact d'arc 16 reliés tous les deux à un tube métallique 17 prolongé par une tringle métallique de manoeuvre 18, traversant de manière étanche le flasque 3.

Un piston de soufflage 20, disposé à l'extrémité d'un tube 21 fixé au flasque 3, est en mouvement relatif par rapport à un cylindre de soufflage métallique 22, électriquement et mécaniquement relié par une collerette métallique 23 au tube 17. Le cylindre de soufflage est terminé par des contacts électriques glissants 24 coopérant avec le tube 17.

Une buse de soufflage 25 en matériau isolant complète l'équipement intérieur de l'envelope 1A-1B.

L'enveloppe isolante est en contact avec un collier 30 relié électriquement et, de préférence également mécaniquement, à la gaine 5. Le collier est placé au droit de la zone de séparation des contacts de l'appareil, représenté dans la figure en position ouverte (déclenchée).

Le collier 30 mis à la terre par la gaine 5, dérive les courants de fuite qui n'ont donc aucune possibilité de transiter par les contacts de l'appareil. L'appareil joue donc bien à la fois le rôle de disjoncteur et de sectionneur.

Le collier 30 est muni de passages transversaux 31 pour permettre la libre circulation de l'air sous pression ou à la pression atmosphérique qui se trouve à l'intérieur de la gaine 5, pour refroidir le jeu de barres.

Selon l'invention, le collier 30 est percé d'un canal radial 33 à une extrémité duquel est fixé un dispositif optique 34 pour permettre l'observation visuelle de l'état des contacts.

Le collier 30 est également muni d'un passage radial 35 pour permettre le remplissage en gaz isolant du volume V. En fonctionnement normal, le passage 35 est obturé par un bouchon étanche 36.

Pour assurer la tenue diélectrique de l'appareil lorsqu'étant en position ouverte, une brusque diminution de la pression de gaz isolant intervient, on choisit par construction une distance suffisante entre les contacts, à l'état ouvert, pour assurer une tenue diélectrique supérieure à celle à la masse.

La tringle de manoeuvre 18 est reliée, par une bielle 40 et une tringle isolante 41 à un dispositif de manoeuvre 42 mécanique, pneumatique ou hydraulique de type connu en soi. Un organe de verrouillage connu en soi et symbolisé dans la figure par le cadenas 43, permet d'interdire toute manoeuvre intempestive de l'appareil lorsqu'il est en position ouverte.

La gaine 5 porte un dispositif optique 37 permettant d'observer, à travers une ouverture 38 de la prise de courant 51, la position de la bielle 40 et des tringles de manoeuvre 18 et 41.

Le dispositif qui vient d'être décrit par un exemple nullement limitatif, permet de supprimer le sectionneur dans l'air d'une installation de protection de générateur.

L'appareil de l'invention est compact et permet un gain de place dans les postes.

Il est à faibles pertes Joule, de sorte que son fonctionnement est économique.

Il possède peu de pièces mobiles et par suite il est d'un prix de revient plus faible et d'un coût de maintenance diminué.

Il trouve une application particulière pour la protection des générateurs de centrale de production d'éléctricité.

## Revendications

1. Disjoncteur-sectionneur, en particulier destiné à être associé à un générateur et disposé à l'intérieur d'une gaine métallique, comprenant une enveloppe isolante (1A-1B) étanche fermée par des flasques d'extrémité (2, 3), remplie d'un gaz à bonnes propriétés diélectriques sous une pression de quelques bars, à l'intérieur de laquelle sont disposés un ensemble fixe comprenant un contact permanent fixe (11) et un contact d'arc fixe (12) et un ensemble mobile comprenant un contact permanent mobile (15) et un contact d'arc mobile (16), un cylindre de soufflage (22), un piston de soufflage (20) et une buse de soufflage (25), ledit ensemble mobile étant relié à une tringle de manoeuvre (18) traversant de manière étanche l'un (3) desdits flasques et reliée à l'extérieur de ce dernier à un dispositif de manoeuvre (42), l'enveloppe portant un collier métallique (30) placé à l'intérieur de la gaine métallique (5), disposé au droit de la zone de séparation des contacts et relié à la terre, caractérisé en ce que ledit collier (30) comprend un canal radial (33) muni d'un dispositif optique (34) permettant de visualiser la position des contacts.

## Patentansprüche

1. Last-Trennschalter, insbesondere in Verbindung mit einem Generator, wobei der Schalter im Inneren eines metallischen Gehäuses angeordnet ist und eine dichte, isolierende Hülle (1A-1B) aufweist, die durch Endflansche (2, 3) verschlossen und mit einem unter einem Druck von einigen Bar stehenden Gas mit guten dielektrischen Eigenschaften gefüllt ist, wobei im Inneren der Hülle eine feststehende Einheit aus einem festen Dauerkontakt (11) und einem festen Lichtbogenkontakt (12) sowie eine bewegliche Einheit aus einem beweglichen Dauerkontakt (15) und einem beweglichen Lichtbogenkontakt (16) und ein Blaszylinder (22), ein Blaskolben (20) und eine Blasdüse (25) angeordnet sind, wobei die bewegliche Einheit mit einem Betätigungsgestänge (18) verbunden ist, das einen der Flansche (3) abgedichtet durchquert und an der Außenseite des Flansches mit einer Betätigungseinrichtung (42) verbunden ist, wobei die Hülle einen metallischen Flanschring (30) trägt, der im Inneren des metallischen Gehäuses (5) in Höhe der Trennzone der Kontakte angeordnet und mit Erde verbunden ist, dadurch gekennzeichnet, daß der Flanschring (30) einen radialen Kanal (33) aufweist, der mit einer optischen Einrichtung (34) versehen ist, die es ermöglicht, die Schaltstellung der Kontakte optisch zu erfassen.

## Claims

1. A circuit breaker/isolating switch device intended, in particular, to be associated with a generator, the device being disposed inside a metal sheath and comprising a gastight insulating casing (1A-1B) closed by end plates (2, 3), filled with a gas having good dielectric properties and at a pressure of a few bars, the casing containing a fixed assembly comprising a fixed permanent contact (11) and a fixed arcing contact (12), a moving assembly comprising a moving permanent contact (15) and a moving arcing contact (16), a blast cylinder (22), a blast piston (20), and a blast nozzle (25), said moving assembly being connected to a drive rod (18) passing in gastight manner through one of said end plates (3) and connected outside said casing to a drive mechanism (42), the casing carrying a metal collar (30) placed inside the metal sheath (5), disposed level with the contact separation zone and connected to ground, the device being characterized in that said collar (30) includes a radial channel (33) provided with an optical device (34) enabling the position of the contacts to be inspected.
